# DEMANDE DE BREVET EUROPEEN

(11) **EP 1 792 554 A1**
(43) Date de publication de la demande: **06.06.2007**
(21) Numéro de dépôt: 06301175.3
(22) Date de dépôt: 24.11.2006
(51) Int. Cl.: A47G 1/06, B42F 1/02, B42F 15/06, F16B 2/20, G09F 1/12, G09F 7/18

(54) **Baguette profilée élastiquement déformable permettant l'accrochage de feuilles papier, affiches ou similaires**

(30) Priorité: 30.11.2005 FR 0512136; 21.11.2006 FR 0655013
(71) Demandeur: SA Gourlin Participation, 27400 Louviers (FR)
(72) Inventeur: Gourlin, Benoît, 27400, LOUVIERS (FR); Freret, Jean-Baptiste, 27400, LOUVIERS (FR)
(74) Mandataire: Livet, Marie-José

(57) **Abrégé**

Baguette profilée élastiquement déformable comportant deux branches de pincement (1, 2) situées en regard, et une membrure profilée (3) élastiquement déformable fixée à l'une des branches de pincement (1) et recouvrant la face externe de l'autre branche de pincement (2), cette baguette profilée étant articulée autour de trois axes d'articulation parallèles (A, B, C) formant ressort, de façon à pouvoir être déplacée de part et d'autre d'une position d'équilibre métastable, entre une position fermée dans laquelle les deux branches de pincement (1, 2) s'appliquent l'une contre l'autre pour permettre de pincer une feuille entre celles-ci, et d'autre part, une position ouverte dans laquelle les deux branches de pincement (1, 2) sont espacées angulairement l'une de l'autre, caractérisée en ce qu'elle est réalisée par extrusion bi-matériaux à partir d'une première matière plastique essentiellement rigide et d'une seconde matière plastique plus souple, permettant de définir les trois axes d'articulation (A, B, C).

## Description

La présente invention a pour objet une baguette profilée élastiquement déformable susceptible d'être coupée à la longueur souhaitée et permettant l'accrochage de feuilles de très faible épaisseur telles que des affiches, en particulier des affiches informatives sur les lieux de vente.

Dans les surfaces commerciales, il est essentiel que les clients puissent disposer d'informations claires et nombreuses concernant les différents produits offerts à la vente.

Pour satisfaire à cet impératif, les responsables de ces locaux ont pris l'habitude de suspendre à différents endroits des affiches de toutes tailles sur lesquelles sont inscrits les renseignements nécessaires (type d'article, prix, promotions, rabais, ristournes...).

Ces affiches, qui doivent être remplacées fréquemment, en particulier en cas de modification de l'agencement du magasin, sont en règle générale suspendues au moyen d'organes d'accrochage improvisés souvent peu satisfaisants tant du point de vue de leur aspect esthétique que de leur aptitude à être facilement mis en place.

On n'a jusqu'à présent jamais proposé de moyen permettant un accrochage à la fois esthétique sûr et pratique d'affiches ayant pour fonction d'informer la clientèle des surfaces commerciales.

La présente invention a pour objet de proposer une baguette profilée élastiquement déformable de nature à combler cette lacune et donc susceptible de garantir un blocage par pincement, sûr, d'affiches d'informations ou d'affiches publicitaires.

Cette baguette profilée est susceptible d'être accrochée à un support horizontal ou vertical quelconque, notamment par l'intermédiaire de câbles ou de chaînes introduits dans des anneaux de suspension.

Pour qu'une telle baguette profilée puisse donner satisfaction, il est essentiel qu'elle permette d'obtenir une force de pincement suffisante pour pincer une affiche de très faible épaisseur et garantir un maintien sûr de celle-ci, et puisse être ouverte ou fermée un grand nombre de fois sans nuire à cette force de pincement vu que de telles affiches doivent être changées très fréquemment.

La baguette profilée, élastiquement déformable, qui fait l'objet de l'invention, comporte :
- d'une part, deux branches de pincement réalisées sous la forme de deux lamelles mobiles en rotation l'une par rapport à l'autre dont les faces internes sont situées en regard, et
- d'autre part, une membrure profilée élastiquement déformable fixée à l'une des branches de pincement ou première branche de pincement et recouvrant la face externe de l'autre branche de pincement ou seconde branche de pincement.

Une telle baguette profilée définit ainsi une pince permettant de bloquer une affiche au niveau de son bord supérieur.

Cette baguette profilée est articulée autour de trois axes d'articulation parallèles formant ressort s'étendant parallèlement à l'axe longitudinal des branches de pincement de façon à pouvoir être déplacée de part et d'autre d'une position d'équilibre métastable dans laquelle ces trois axes sont coplanaires entre d'une part une position fermée dans laquelle les deux branches de pincement s'appliquent l'une contre l'autre par l'un de leurs bords longitudinaux ou premier bord longitudinal pour permettre de pincer une feuille entre celles-ci et d'autre part une position ouverte dans laquelle les deux branches de pincement sont espacées angulairement l'une de l'autre.

Selon l'invention, cette baguette profilée est élastiquement rappelée vers la position fermée ou vers la position ouverte sous l'action d'une contrainte s'exerçant sur elle, à partir de la position d'équilibre métastable.

L'utilisateur peut ainsi très facilement introduire le bord supérieur d'une affiche entre les deux branches de pincement lorsque la baguette profilée est en position ouverte, puis refermer celle-ci de sorte que l'affiche soit emprisonnée par effet de serrage entre ces deux branches.

Selon l'invention, une telle baguette profilée est caractérisée en ce qu'elle est réalisée par extrusion bi-matériau à partir d'une première matière plastique essentiellement rigide et d'une seconde matière plastique plus souple, permettant de définir les trois axes d'articulation.

On peut, à titre d'exemple non limitatif, choisir à cet effet un PVC rigide et un PVC plus souple.

Ce mode de réalisation bi matière permet de façon surprenante d'obtenir une force de pincement suffisante pour pincer une affiche de très faible épaisseur, et de réutiliser la baguette profilée un grand nombre de fois sans nuire à cette force de pincement.

Il ne serait pas possible d'obtenir de tels avantages si la baguette profilée avait une configuration autre et était à titre d'exemple constituée par un élément mono-matière moulé en un matériau synthétique obligatoirement essentiellement rigide, les trois axes d'articulation formant ressort étant définis par une simple réduction de l'épaisseur de ce matériau synthétique à ce niveau.

Un autre avantage essentiel de la baguette profilée conforme à l'invention est lié au fait qu'elle peut, en fonction de son utilisation, être coupée à la longueur nécessaire, ce qui lui confère un caractère universel.

Selon l'invention, la longueur des deux branches de pincement ainsi que de la membrure profilée peut ainsi avantageusement correspondre à la largeur de l'affiche informative ou publicitaire dont elle doit permettre l'accrochage et la suspension.

Il est également envisageable de suspendre une affiche au moyen d'une ou de plusieurs (en règle générale deux) baguettes de faible longueur mises en place sur un même bord de cette affiche.

La ou les baguette(s) peu(t) peuv(ent) également être fixée(s) en partie basse des affiches et ainsi servir de lest pour tendre correctement celles-ci.

La membrure profilée a une double fonction consistant, d'une part, à donner à la baguette profilée un aspect très attractif pour les consommateurs, et, d'autre part, et surtout à augmenter la force de pincement de celle-ci de façon à garantir un blocage sûr de l'affiche à suspendre entre les deux branches de pincement, en excluant tout risque de dégagement intempestif de cette affiche.

Selon une caractéristique préférentielle de l'invention, la membrure profilée est articulée sur la seconde branche de pincement, d'une part, autour d'un premier axe d'articulation situé au niveau du premier bord longitudinal de cette branche et, d'autre part, autour d'un second axe d'articulation situé au niveau du second bord longitudinal de celle-ci.

Compte tenu de cette caractéristique, le pincement de la feuille ou de l'affiche est effectué au niveau du premier axe d'articulation, c'est-à-dire à l'endroit exact où la force de pincement est maximum.

Selon une autre caractéristique préférentielle de l'invention, la membrure profilée comprend :
- une première partie rectiligne fixée solidairement au second bord longitudinal de la première branche de pincement, s'étendant de préférence essentiellement perpendiculairement à celle-ci et articulée sur la seconde branche de pincement au niveau de son second bord longitudinal, autour du second axe d'articulation,
- une seconde partie rectiligne fixée solidairement à la première partie rectiligne et s'étendant de préférence essentiellement perpendiculairement à celle-ci, et
- une partie courbe, de préférence de forme fuselée, située dans le prolongement de la seconde partie rectiligne, articulée sur celle-ci autour du troisième axe d'articulation et articulée à son extrémité sur la seconde branche de pincement au niveau de son premier bord longitudinal, autour du premier axe d'articulation.

Cette forme fuselée de la partie courbe de la membrure profilée permet de donner à la baguette un aspect très attractif pour les consommateurs.

Selon une caractéristique particulièrement avantageuse de l'invention, la première partie rectiligne et la seconde partie rectiligne de la membrure profilée sont séparées par un double coudage permettant de définir un rail de positionnement d'organes d'accrochage.

La présence d'un tel rail de positionnement est en fait quasiment indispensable pour garantir le caractère universel de la baguette profilée conforme à l'invention dans la mesure où un utilisateur peut introduire des organes d'accrochage amovibles dans un tel rail et les déplacer par simple translation jusqu'à l'endroit nécessaire.

En effet, si la baguette profilée était équipée d'organes d'accrochage fixés solidairement à celle-ci, elle ne pourrait plus être coupée à la longueur nécessaire et devrait par suite être adaptée dès sa fabrication à chaque cas particulier.

Selon l'invention, les organes d'accrochage amovibles peuvent avantageusement être constitués par des pattes en forme de L dont une branche est destinée à être introduite dans le rail d'accrochage, tandis que l'autre est équipée à son extrémité d'un anneau de suspension permettant d'accrocher la baguette profilée et l'affiche bloquée dans celle-ci, par exemple par l'intermédiaire de câbles ou de chaînes.

Selon une autre caractéristique particulièrement avantageuse de l'invention les deux branches de pincement sont équipées sur leur face interne, à proximité de leur premier bord longitudinal, de bandes de matériau souple réalisées lors de l'extrusion en la seconde matière plastique et de nature à augmenter la force de pincement d'une feuille.

La présence de ces bandes permet de bloquer plus fortement l'affiche entre les deux branches de pincement et donc de garantir un maintien plus sûr de celle-ci.

Selon l'invention, le premier axe d'articulation et la bande de matériau souple équipant la face interne de la seconde branche de pincement peuvent avantageusement être solidaires et constituer un capuchon en un matériau souple chevauchant le premier bord longitudinal de cette branche de pincement.

Selon une autre caractéristique de l'invention, il est également possible de fixer la face externe de la première branche de pincement de la baguette profilée à une surface plane quelconque (tableau ou autre) en règle générale verticale, soit par collage au moyen d'un adhésif soit au moyen d'un aimant si cette surface plane a des propriétés ferromagnétiques.

Dans ce cas, il peut être avantageux d'équiper cette face externe d'un épaulement permettant de loger un tel aimant ou encore un adhésif double face.

Il peut également être envisagé selon l'invention de coller la face externe de la première branche de pincement de la baguette profilée sur un bord d'un panneau support quelconque.

Conformément à ce mode de réalisation de l'invention, une affiche peut ensuite être introduite entre les deux branches de pincement après ouverture de la baguette profilée et appliquée sur le panneau support.

Une application de ce mode de réalisation consiste à fixer sur tous les bords rectilignes d'un panneau support polygonal la face externe de la première branche de pincement d'une baguette profilée selon l'invention ayant une longueur correspondante.

On peut ainsi obtenir des cadres dans lesquels des affiches ou des tableaux de géométrie adaptée peuvent ensuite être introduits après ouverture de toutes les baguettes profilées entourant la périphérie du panneau support.

Les angles d'un tel cadre peuvent être coupés et assemblés, en particulier à l'onglet dans le cas d'un cadre rectangulaire ou encore être constitués par des éléments auxiliaires obtenus par moulage et fixés eux aussi sur le panneau support au niveau des coins de ces panneaux.

L'invention se rapporte également à un cadre de ce type.

Un tel cadre peut bien entendu lui aussi être suspendu au moyen d'anneaux ou fixé à une surface plane au moyen d'adhésifs ou d'aimants.

Les caractéristiques de la baguette profilée ainsi que du cadre qui font l'objet de l'invention seront décrites plus en détail en se référant aux dessins annexés dans lesquels :
- la figure 1 est une vue en perspective d'un tronçon d'une baguette profilée conforme à l'invention représentée en position fermée,
- la figure 2 est une coupe transversale de la baguette profilée représentée sur la figure 1 en position d'équilibre métastable,
- la figure 3 est une coupe transversale de la baguette profilée représentée sur la figure 1 en position fermée,
- la figure 4 est une coupe transversale de la baguette profilée représentée sur la figure 1 en position ouverte,
- la figure 5 est une vue en perspective représentant une affiche publicitaire maintenue par pincement dans une baguette profilée conforme à l'invention permettant sa suspension,
- la figure 6 représente un cadre conforme à l'invention.

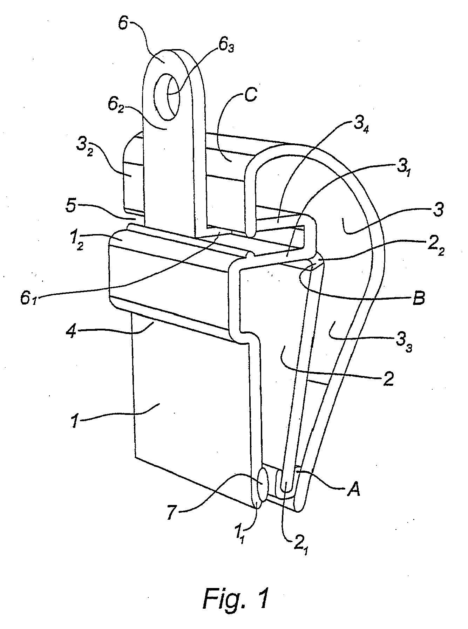

Selon la figure 1, la baguette profilée est constituée par l'assemblage d'une part de deux branches de pincement longitudinales réalisées sous la forme de lamelles dont les faces internes sont montées en regard l'une de l'autre, à savoir une première branche de pincement 1 et une seconde branche de pincement 2 et d'autre part d'une membrure profilée élastiquement déformable 3 fixée solidairement à la première branche de pincement 1 et recouvrant la face externe de la seconde branche de pincement 2.

La face externe de la première branche de pincement 1 comporte un épaulement 4 permettant de loger un organe tel qu'un aimant ou un adhésif double face non représenté permettant de fixer la baguette profilée à une paroi plane.

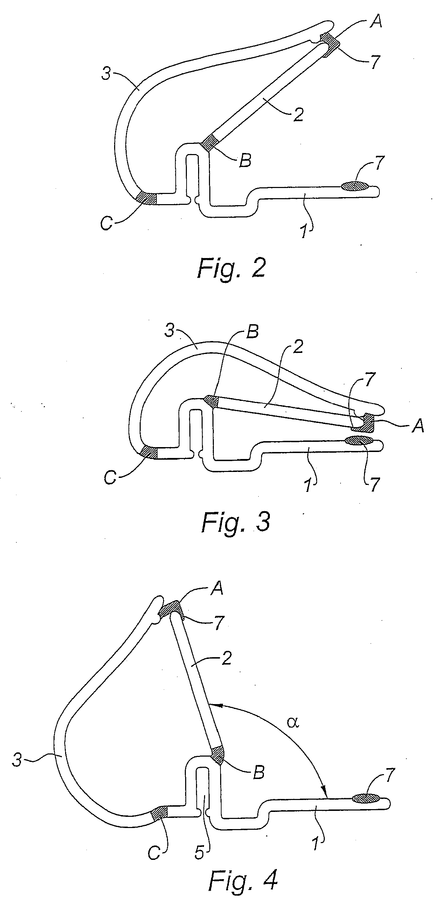

Comme il sera décrit plus en détail dans la suite de cet exposé, la baguette profilée est mobile, de part et d'autre d'une position d'équilibre métastable représentée sur la figure 2 entre deux positions d'équilibre stables, à savoir une position fermée représentée sur la figure 3 dans laquelle les deux branches de pincement 1, 2 s'appliquent l'une contre l'autre par l'un de leurs bords longitudinaux ou premier bord longitudinal 1¹, 2¹ et une position ouverte représentée sur la figure 4 dans laquelle ces deux branches de pincement 1, 2 sont espacées angulairement d'un angle α supérieur à 90°.

Selon la figure 1, la membrure profilée 3 comprend une première partie rectiligne 3¹ fixée solidairement au second bord longitudinal 1² de la première branche de pincement 1 et s'étendant essentiellement perpendiculairement à celle-ci, et une seconde partie rectiligne 3² essentiellement perpendiculaire à la première partie rectiligne 3² et se prolongeant par une partie courbe de forme fuselée 3³ par laquelle elle recouvre la face externe de la seconde branche de pincement 2.

La seconde partie rectiligne 3₂ est fixée solidairement à la première partie rectiligne 3₁ par l'intermédiaire d'un double coudage 3₄ de façon à définir un rail de guidage et de positionnement 5.

Un organe d'accrochage amovible 6 en forme de L est monté dans ce rail 5 par l'une de ses branches 6₁.

La seconde branche 6₂ de cet organe d'accrochage 6 est équipée d'un anneau de suspension 6₃ à son extrémité.

La seconde branche de pincement 2 est articulée sur la membrure profilée 3 au niveau de ses deux bords longitudinaux 2¹, 2² autour de deux axes d'articulation schématisés par les références A et B.

Le premier bord longitudinal 2¹ de la branche de pincement 2 est plus précisément articulé à l'extrémité libre de la partie courbe 3³ de la membrure profilée 3 autour d'un premier axe d'articulation A alors que le second bord longitudinal 2² de cette branche de pivotement 2 est articulé à l'extrémité opposée à la première branche de pincement 1 de la première partie rectiligne 3¹ de cette membrure 3, ce autour d'un second axe d'articulation B.

La partie courbe 3³ de la membrure profilée 3 est quant à elle articulée à l'extrémité de la seconde partie rectiligne 3² de celle-ci autour d'un troisième axe d'articulation C.

Les trois axes d'articulation A, B et C sont parallèles entre eux et à l'axe longitudinal des deux branches de pincement 1, 2.

La baguette profilée 1, 2, 3 est fabriquée par un procédé de bi injection.

Les deux branches de pincement 1, 2 ainsi que la membrure profilée 3 sont réalisées en une première matière plastique essentiellement rigide alors que les trois axes d'articulation A, B, C sont réalisés en une seconde matière plastique plus souple.

Selon la figure 2, la baguette profilée 1, 2, 3 peut être placée dans une position d'équilibre métastable, médiane dans laquelle les trois axes d'articulation A, B, C sont coplanaires.

A partir de cette position médiane, toute contrainte exercée sur la baguette profilée 1, 2, 3 a pour effet de rappeler élastiquement celle-ci soit vers la position fermée représentée sur la figure 3, soit vers la position ouverte représentée sur la figure 4.

Selon la figure 1, les deux branches de pincement 1, 2 sont équipées, sur leurs faces internes, à proximité de leur premier bord longitudinal 1¹, 2¹ de bandes de matériau souple 7 permettant d'augmenter l'adhésion de la baguette profilée sur une affiche en position fermée et donc de bloquer de façon plus sure une affiche quelconque à la partie interne de celle-ci, entre les deux branches de pincement 1, 2.

Selon la figure 1, le premier axe d'articulation A et la bande de matériau souple 7 équipant la force interne de la seconde branche de pincement 2 sont solidaires et constituent un capuchon en matériau souple chevauchant le premier bord longitudinal 21 de cette branche de pincement.

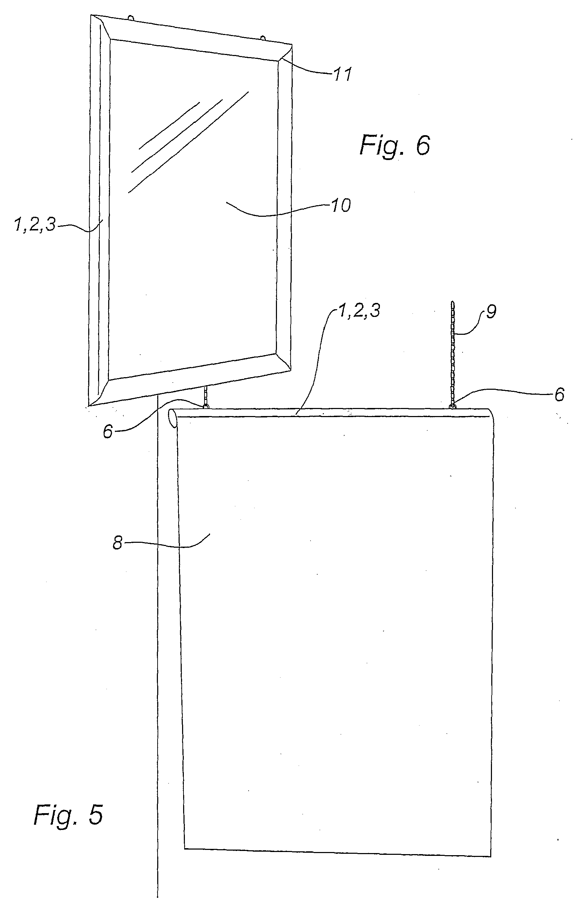

Selon la figure 5, une affiche 8 est bloquée par son bord supérieur à la partie interne d'une baguette profilée 1, 2, 3 de même longueur maintenue en position fermée.

Cette baguette profilée 1, 2, 3 est équipée de part et d'autre de deux organes d'accrochage 6 qui sont montés dans son rail de positionnement non représenté et coopèrent avec des câbles de suspension 9 introduits dans celle-ci.

Selon la figure 6, un panneau support rectangulaire 10 est entouré, sur sa périphérie, par quatre baguettes profilées 1, 2, 3 respectivement collées sur chacun de ses bords par la face externe de leur première branche de pincement 1 et ayant la même longueur.

Ces quatre baguettes profilées 1, 2, 3 définissent ainsi un cadre dont les quatre coins 11 sont coupés et assemblés à l'onglet.

En déplaçant ces quatre baguettes profilées 1, 2, 3 en position ouverte, un utilisateur peut appliquer une affiche de même géométrie contre le panneau support 10 puis la bloquer dans cette position en déplaçant les quatre baguettes profilées en position fermée.

## Revendications

1. Baguette profilée élastiquement déformable susceptible d'être coupée à la longueur souhaitée, permettant l'accrochage de feuilles telles que des affiches, en particulier des affiches informatives sur les lieux de vente et comportant :
- d'une part, deux branches de pincement (1, 2) réalisées sous la forme de deux lamelles mobiles en rotation, l'une par rapport à l'autre, dont les faces internes sont situées en regard, et
- d'autre part, une membrure profilée (3) élastiquement déformable fixée à l'une des branches de pincement ou première branche de pincement (1) et recouvrant la face externe de l'autre branche de pincement ou seconde branche de pincement (2),
- cette baguette profilée étant articulée autour de trois axes d'articulation parallèles (A, B, C) formant ressort, s'étendant parallèlement à l'axe longitudinal des branches de pincement (1, 2) de façon à pouvoir être déplacée de part et d'autre d'une position d'équilibre métastable dans laquelle ces trois axes sont coplanaires, entre d'une part une position fermée dans laquelle les deux branches de pincement (1, 2) s'appliquent l'une contre l'autre par l'un de leurs bords longitudinaux ou premier bord longitudinal (1₁, 2₁) pour permettre de pincer une feuille entre celles-ci, et d'autre part, une position ouverte dans laquelle les deux branches de pincement (1, 2) sont espacées angulairement l'une de l'autre, et
- cette baguette profilée étant élastiquement rappelée vers la position fermée ou vers la position ouverte sous l'action d'une contrainte s'exerçant sur elle, à partir de la position d'équilibre métastable,
**caractérisée en ce qu'**
elle est réalisée par extrusion bi-matériaux à partir d'une première matière plastique essentiellement rigide et d'une seconde matière plastique plus souple, permettant de définir les trois axes d'articulation (A, B, C).

2. Baguette profilée selon la revendication 1,
**caractérisée en ce que**
la membrure profilée (3) est articulée sur la seconde branche de pincement (2), d'une part, autour d'un premier axe d'articulation (A) situé au niveau du premier bord longitudinal (2₁) de cette branche (2) et, d'autre part, autour d'un second axe d'articulation (B) situé au niveau du second bord longitudinal (2₂) de celle-ci.

3. Baguette profilée selon la revendication 2,
**caractérisée en ce que**
la membrure profilée (3) comprend :
- une première partie rectiligne (3₁) fixée solidairement au second bord longitudinal (1₂) de la première branche de pincement (1), s'étendant de préférence essentiellement perpendiculairement à celle-ci, et articulée sur la seconde branche de pincement (2) au niveau de son second bord longitudinal (2₂), autour du second axe d'articulation (B),
- une seconde partie rectiligne (3₂) fixée solidairement à la première partie rectiligne (3₁) et s'étendant de préférence essentiellement perpendiculairement à celle-ci, et
- une partie courbe (3₃), de préférence de forme fuselée située dans le prolongement de la seconde partie rectiligne (3₂), articulée sur celle-ci autour du troisième axe d'articulation (C) et articulée à son extrémité sur la seconde branche de pincement (2) au niveau de son premier bord longitudinal (2₁), autour du premier axe d'articulation (A).

4. Baguette profilée selon la revendication 3,
**caractérisée en ce que**
la première partie rectiligne (3₁) et la seconde partie rectiligne (3₂) de la membrure profilée (3) sont séparées par un double coudage (3₄) permettant de définir un rail de positionnement d'organe d'accrochage (6).

5. Baguette profilée selon l'une quelconque des revendications 1 à 4,
**caractérisée en ce que**
les deux branches de pincement (1, 2) sont équipées sur leur face interne, à proximité de leur premier bord longitudinal (1₁, 2₁) de bandes de matériau souple (7) réalisées lors de l'extrusion en la seconde matière plastique et de nature à augmenter la force de pincement d'une feuille.

6. Baguette profilée selon les revendications 2 et 5,
**caractérisée en ce que**
le premier axe d'articulation (A) et la bande de matériau souple équipant la face interne de la seconde branche de pincement (2) sont solidaires et constituent un capuchon en matériau souple chevauchant le premier bord longitudinal (2₁) de cette branche de pincement.

7. Baguette profilée selon l'une quelconque des revendications 1 à 6,
**caractérisée en ce que**
la face externe de la première branche de pincement (1) est équipée d'un aimant.

8. Baguette profilée selon l'une quelconque des revendications 1 à 6,
**caractérisée en ce que**
la face externe de la première branche de pincement (1) est équipée d'un adhésif.

9. Baguette profilée selon l'une quelconque des revendications 1 à 6,
**caractérisée en ce que**
la face externe de la première branche de pincement (1) est collée sur un panneau support.

10. Cadre
**caractérisé en ce qu'**
il est constitué par un panneau support polygonal (10) entouré sur sa périphérie par plusieurs baguettes profilées (1, 2, 3) selon l'une quelconque des revendications 1 à 6, ayant la même longueur que ses bords rectilignes et fixées sur ce panneau support (10) par la face externe de leur première branche de pincement (1).
